# EUROPEAN PATENT SPECIFICATION

(11) **EP 1 350 047 B1**
(45) Date of publication and mention of the grant of the patent: **24.02.2010**
(21) Application number: 02734891.1
(22) Date of filing: 11.01.2002
(51) Int. Cl.: F16J 15/06, F16J 15/08

(54) **A SEALING STRIP AND A COMPONENT COMPRISING A FIRST AND A SECOND PART AND A SEALING STRIP**
DICHTUNGSSTREIFEN UND KOMPONENTE MIT EINEM ERSTEN UND EINEM ZWEITEN TEIL UND EINEM DICHTUNGSSTREIFEN
BANDE D'ETANCHEITE ET COMPOSANT COMPORTANT UNE PREMIERE PIECE, UNE DEUXIEME PIECE ET UNE BANDE D'ETANCHEITE

(30) Priority: 12.01.2001 SE 0100087
(43) Date of publication of application: 08.10.2003
(73) Proprietor: VOLVO LASTVAGNAR AB, 405 08 Göteborg (SE)
(72) Inventor: STEFANSSON, Ulf, S-541 45 Skövde (SE)
(74) Representative: Hammond, Andrew David
(86) International application number: PCT/SE2002/000039
(87) International publication number: WO 2002/059507

(56) References cited:
- WO-A1-99/41531
- US-A- 5 076 557
- DATABASE WPI Week 199728, Derwent Publications Ltd., London, GB; AN 1997-301394, XP002966266 & JP 9 112 699 A (SUMITOMO DENSO KK) 02 May 1997

## Description

### Technical field

The present invention relates to a sealing strip for sealing between two joined component parts. Especially, the Invention relates to a sealing strip which by means of clamping force is to be fitted into a groove for retaining the sealing strip before joining the component parts together in order to form a tight joint. Particularly, the invention relates to a sealing strip in accordance with the preamble of claim 1. Furthermore, the invention particularly relates to a sealing strip for creating a liquid or gas-impermeable joint between two components. The invention also relates to a component consisting of two component parts, wherein at least one of the component parts exhibits a groove in which a sealing strip is installed in order to form a tight joint between the component parts.

### Technical background

Typically, when sealing between component parts of a component, particularly when seals between covers and housings which are Intended to accommodate a liquid such as water or oil are concerned, a groove is formed in one of the component parts and a sealing strip is fitted into the groove. In order to provide a good sealing action, the sealing strip should have a height which exceeds the depth of the groove. When the component parts are joined together, the sealing strip is compressed between the component parts and a sealing is created. The sealing strip should be substantially incompressible in order to provide a good sealing action. Furthermore, the sealing should abut against the respective component parts with a substantially constant pressure along the sealing joint. For this reason, it is of importance that the height of the seal exceeds the depth of the groove with a constant measure along the sealing joint. This means that the seal will abut against the respective component part with a substantially constant pressure when joining the component parts together in order to form a tight joint. In order to achieve a good sealing action, it is further of importance that the sealing strip is correctly positioned In the longitudinal direction of the groove. A common way of installing seals is to position the seal In a groove by hand, and to try to achieve a continuous stretching of the sealing strip while installing it. If there Is variation of the tensional force in the sealing strip, also the cross-sectional dimensions of the sealing strip will vary as a result the incompressibility of the sealing strip. This in turn results in variation of the pressure along the sealing joint, and that a less tight joint will be created. The sealing strip can be designed with protrusions in order to ensure that the clamping force is as constant as possible, and also in order to facilitate the installation of sealing strips in grooves which are directed downwards and where the sealing strip risks to fall out. One problem with this type of sealing strip is that the height of the sealing strip will increase when the protrusion is compressed, since the sealing strip is substantially incompressible. As discussed above, this means that the pressure along the sealing joint will vary, and that a less tight joint is created.

### Summary of the invention

One object of the invention is to provide a sealing strip which exhibits protrusions for facilitating installation, wherein the change of height of the sealing strip at the protrusion when pinching the strip in a groove is reduced, and thereby a tighter seal is created. This object is achieved by means of a sealing strip according to the characterizing portion of claim 1. As a result of the protrusion exhibiting a recess which is intended to be at least partially compressed by said pinching, a clamping force is obtained when compressing the protrusion at the same time as the recess provides space for the incompressible material, wherein the change of height of the sealing strip is reduced and a tighter joint can be accomplished.

A further object of the invention is to provide a component including a first and a second component part, and a sealing strip which is adapted to be inserted into a groove present on the first component part, wherein the risk of change of height of the sealing strip occurring at the protrusion when pinching the strip into a groove is reduced. This object is achieved by means of a component according to the characterising portion of claim 10.

### Description of figures

In the following, embodiments of the invention will be described in detail with reference to the attached figures in the drawings, in which:
- Fig. 1: shows a top view of a portion of a sealing strip having a protrusion;
- Fig. 2: shows the cross-section of the sealing strip and the protrusion at the partition I-I In Figure 1 in accordance with one embodiment of the invention;
- Fig. 3: shows the cross-section of the sealing strip and the protrusion at the partition I-I in Figure 1 in accordance with a second embodiment of the invention;
- Fig. 4: shows the cross-section of the sealing strip and the protrusion at the partition I-I in Figure 1 in accordance with a third embodiment of the invention;
- Fig. 5: shows the cross-section of the sealing strip and the protrusion at the partition I-I in Figure 1 in accordance with a fourth embodiment of the invention;
- Fig. 6: shows a component part which exhibits a groove for fastening a sealing strip, wherein the groove is designed with a longitudinal extension which varies in three dimensions;
- Fig. 7: shows a sealing strip having two successive protrusions; and
- Fig. 8: shows a perspective view of an embodiment of a sealing strip having a protrusion.

### Detailed description of the invention

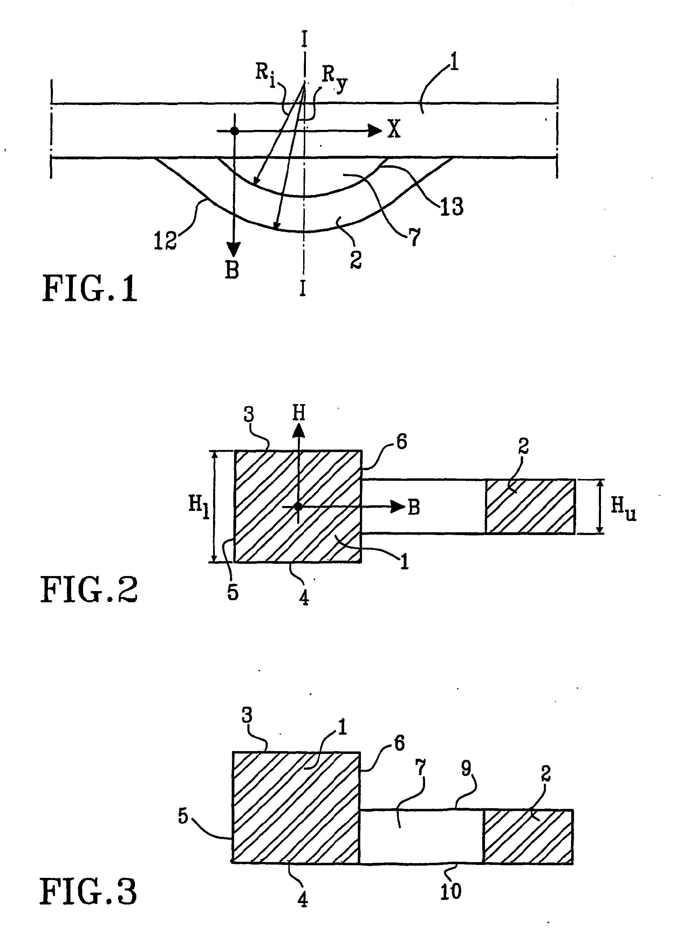

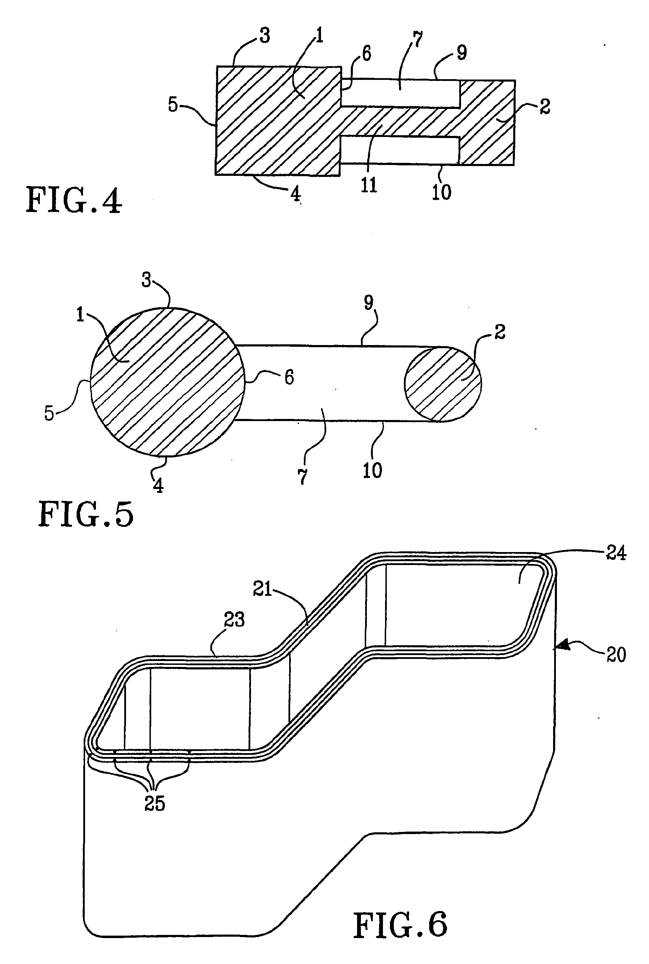

Fig. 1 shows a sealing strip 1 having a protrusion 2. The sealing strip 1 can be designed with a cross-section of any shape, but exhibits an upper delimitation surface 3 intended to abut against a second component part (not shown) included in a component in order to form a tight joint, and a lower delimitation surface 4 intended to abut against a bottom surface in a groove (not shown) formed in a first component part of said component. In the embodiments shown in Figures 2 - 4, the sealing strip 1 is designed with a substantially rectangular cross-section, whereas the cross-section is circular in the embodiment shown in Figure 5. Furthermore, the sealing strip exhibits a first and a second side surface 5, 6. The upper delimitation surface 3, the lower delimitation surface 4, and the first and the second side surfaces together form the outer delimitation surfaces of the sealing strip. This means that the side surfaces and the upper and lower delimitation surfaces can have an optional shape in order to form e.g. a circular, rectangular, hexagonal, or a cross-section of another shape. Accordingly, the interpretation of the expression "surface" should not be limited to a planar surface, but also curved surfaces are included. In a preferred embodiment of the invention, the cross-section is designed with substantially planar upper and lower delimitation surfaces. In a further preferred embodiment, the cross-section is designed with a substantially rectangular shape.

Furthermore, the protrusion 2 is designed with a recess 7. In the embodiments shown in Figures 2, 3 and 5, the recess is designed as a lead-through. In these cases, the lead-through extends In a direction between the upper delimitation surface 3 and the lower delimitation surface 4.

In the embodiment which is shown in Figure 4, the recess forms a narrow waist 11 which connects the outside of the protrusion 2 with the sealing strip.

In order to enable the sealing strip 1 to rest flatly against the bottom surface in the groove where the sealing strip is to be applied, the sealing strip is arranged in such a way that a projection 9, 10 of the upper and lower delimitation surfaces 3, 4 of the protrusion in parallel with the width B of the sealing strip are located between the upper and lower delimitation surfaces of the sealing strip.

In the shown embodiments, the height Hu of the protrusion is smaller than the height HI of the sealing strip. Thereby, "width" and "height" refer to the extension in two directions orthogonal to the length coordinate of the sealing strip. The width coordinate, which in the attached figures is indicated by an arrow B, extends In parallel with the tangent of the lower delimitation surface at the portion which is intended to abut against the bottom surface of the groove into which the sealing strip is intended to be inserted. The height coordinate, indicated by an arrow H, is perpendicular to the length coordinate, indicated with an arrow x, and the width coordinate B.

In order to reduce the change of height of the sealing strip after pinching It into a groove, the protrusion preferably is designed with a height smaller than ½ of the sealing strip height, preferably smaller than 1/3 of the sealing strip height. In other preferred embodiments, the volume of the protrusion is smaller than ½ of the volume of the strip from the beginning of the protrusion to the end of the protrusion. Thereby, "beginning" and "end" refers to those points where the outer side wall 12 of the protrusion abuts against the sealing strip. In still another preferred embodiment, the volume of the protrusion is smaller than 1/3 of the volume of the strip from the beginning of the protrusion to the end of the protrusion. Furthermore, the volume of the recess constitutes at least 1/3 of the total volume of the protrusion. Thereby, "volume of the protrusion" refers to the volume difference between a protrusion lacking the recess and the volume of a protrusion having a recess. The imaginary protrusion having no recess is created by means of imagining the projection of the outer surface of the protrusion being solid towards the sealing strip.

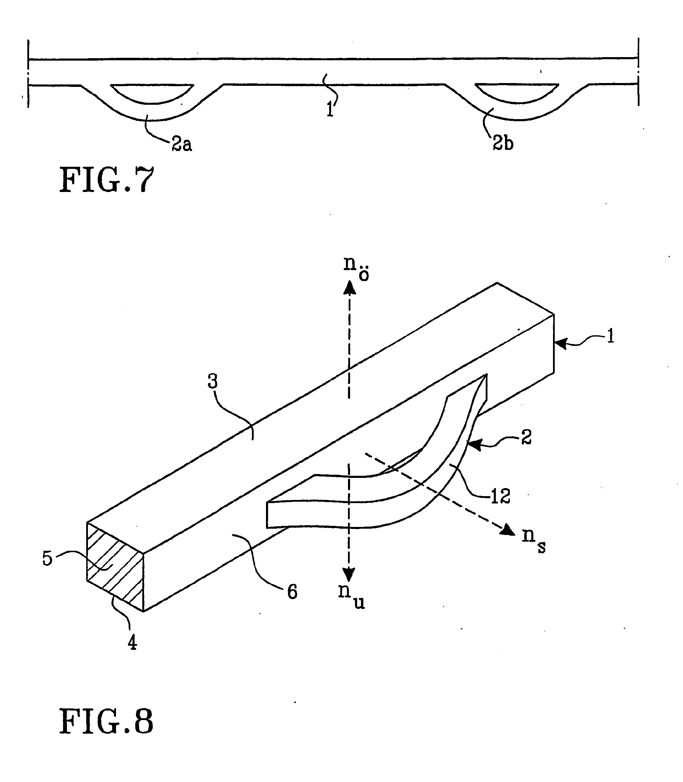

In a particularly preferred embodiment of the invention, which for example is shown in Figure 8, the upper delimitation surface 3 of the sealing strip, the lower delimitation surface 4, and portions of a side surface 6 of the sealing strip where the protrusion 2 is arranged, are designed with a continuous direction of the respective surface perpendiculars of these sides. In Figure 8, these surface perpendiculars are denoted with nö, and ns. The direction of the surface perpendicular nu of a side surface 12 of the protrusion 2, facing away from the sealing strip, changes direction so that the scalar product between the surface perpendicular of this outer side surface and a vector along the longitudinal direction of the sealing strip in this portion shifts sign on both sides of the recess in the longitudinal direction of the sealing strip. By means of this design, a continuous shape of the cross-section of the sealing strip is obtained at the protrusion, something which further reduces the occurrence of change in height when the protrusion is pinched into a groove.

In a further preferred embodiment, the protrusion 2 exhibits an outer side surface 12 facing away from the sealing strip, and an inner side surface 13 facing towards the sealing strip, the inner side surface being curved and exhibiting a maximum radius of curvature Ri, and the outer side surface being curved and exhibiting a maximum radius of curvature Ry, wherein the maximum radius of curvature of the outer side surface is larger than the maximum radius of curvature of the inner side surface.

The sealing strip may of course be designed as an endless strip.

Figure 6 shows a first component part 20 of a component which is intended to be joined to a second component part, not shown, and to support a sealing strip 1 In accordance with the foregoing description in a groove 21 which Is applied along a surface 23 of the first component part 20, which surface surrounds an opening 24 of the first component part 20. In the embodiment shown in figure 6, the groove 21 is designed with a longitudinal direction which varies in three dimensions. This means that the groove is adapted to a sealing strip having a longitudinal direction which varies in three dimensions.

Figure 7 shows a sealing strip 1 with two successive protrusions 2a, 2b. Preferable, the spacing and the design of these protrusions are designed in such a way that the sealing strip is installed in a self-supporting way when installed in a groove facing downwards. This means that the distance between two successive protrusions should be such that µ*F>m*g, where µ Is the coefficient of friction between seal and groove, F is the clamping force of the protrusion, m is the weight supported by a protrusion, and g is the acceleration due to gravity. For the weight m, it is true that m=ρ*A*I, where I = the length between two protrusions, A is the area of the sealing strip, and ρ is the density of the sealing strip.

In a preferred embodiment of the Invention, markings 25 are provided along the groove 21. These markings indicate where the protrusions are to be positioned. In this way, installation with a constant clamping force of the sealing strip along the groove is facilitated.

## Claims

1. A sealing strip (1),
made of a substantially incompressible material, for sealing between a first (20) and a second component part which have been joined together, wherein the sealing strip (1) is adapted to be inserted into a groove (21) present on the first component part (20), and the sealing strip (1) exhibits a substantially constant width along the main portion of its length and at least one protrusion (2) on the sealing strip (1) for positioning the sealing strip (1) in the longitudinal direction relative to said first component part (20), wherein the sealing strip (1) is intended to be pinched into said groove (21) at this portion,
**characterised in that** said at least one protrusion (2) exhibits a recess (7) which is intended to be at least partially compressed by said pinching, while reducing the change of height (H_{I}) of the sealing strip (1) caused by said pinching.

2. A sealing strip according to claim 1,
**characterised in that** said recess (7) is designed as a lead-through.

3. A sealing strip according to claim 2,
wherein the sealing strip (1) exhibits a lower delimitation surface (4) intended to abut against a bottom surface formed in said groove (21), and an upper delimitation surface (3) intended to abut against said second component part,
**characterised in that** the lead-through extends through the protrusion (2) in a direction between said upper delimitation surface (3) and lower delimitation surface (4).

4. A sealing strip according to any one of the preceding claims,
wherein said protrusion (2) exhibits an upper delimitation surface (3) and a lower delimitation surface (4),
**characterised in that** a projection of the upper and lower delimitation surfaces (3; 4) of the protrusion (2) in parallel with the width of the sealing strip are located between the upper and lower delimitation surfaces (3; 4) of the sealing strip (1).

5. A sealing strip according to claim 4,
**characterised in that** the protrusion (2) exhibits an extension (Hᵤ) in height-direction (H) which is smaller than the extension (Hₗ) in height-direction (H) of the sealing strip (1).

6. A sealing strip according to any one of the preceding claims,
**characterised in that** the upper delimitation surface (3) of the sealing strip (1), the lower delimitation surface (4), and portions of a side surface of the sealing strip where the protrusion (2) is arranged, are designed with the surface perpendiculars of these surfaces in a continuous direction, whereas the direction of the surface perpendicular of an outer side surface of the protrusion facing away from the sealing strip (1) changes direction so that the scalar product between the surface perpendicular of this outer side surface and a vector along the longitudinal direction of the sealing strip (1) in this portion shifts sign on both sides of the recess (7) in the longitudinal direction of the sealing strip (1).

7. A sealing strip according to any one of the preceding claims,
**characterised in that** the protrusion (2) exhibits an outer side surface (12) facing away from the sealing strip (1), and an inner side surface (13) facing towards the sealing strip (1), that the inner side surface (13) is curved and exhibits a maximum radius of curvature (Rₗ), and that the outer side surface is curved and exhibits a maximum radius of curvature (R_{y}), wherein the maximum radius of curvature of the outer side surface (12) is larger than the maximum radius of curvature of the inner side surface (13).

8. A sealing strip according to any one of the preceding claims,
**characterised in that** the sealing strip (1) is designed as an endless strip.

9. A sealing strip according to any one of the preceding claims,
**characterised in that** the sealing strip (1) is designed with a longitudinal direction (X) which varies in three dimensions.

10. An assembly including a first component part (20) and a second component part, and a sealing strip (1) which is inserted into a groove (21) being present on the first component part (20), wherein the sealing strip (1) exhibits a substantially constant width along the main portion of its length and at least one protrusion (2) on the sealing strip (1) for positioning the sealing strip (1) in the longitudinal direction relative to said first component part (20), wherein the sealing strip at this portion is pinched into said groove,
**characterised in that** said at least one protrusion (2) exhibits a recess (7) which is at least partially compressed by said pinching, while reducing the change of height (Hₗ) of the sealing strip (1) caused by said pinching.

11. An assembly according to claim 10,
**characterised in that** said recess (7) is designed as a lead-through.

12. An assembly according to claim 11,
wherein the sealing strip (1) exhibits a lower delimitation surface (4) intended to abut against a bottom surface formed in the groove (21), and an upper delimitation surface (4) intended to abut against said second component part,
**characterised in that** the lead-through extends between said upper delimitation surface (3) and lower delimitation surface (4).

13. An assembly according to any one of claims 10 - 12,
wherein said protrusion (2) exhibits an upper delimitation surface (3) and a lower delimitation surface (4),
**characterised in that** a projection of the upper and lower delimitation surfaces (3; 4) of the protrusion (2) in parallel with the width of the sealing strip (1) are located between the upper and the lower delimitation surfaces (3; 4) of the protrusion (2).

14. An assembly according to claim 13,
**characterised in that** the protrusion (2) exhibits an extension (Hu) in height-direction (H) which is smaller than the extension (HI) in height-direction (H) of the sealing strip (1).

15. An assembly according to any one of claims 10 - 14,
**characterised in that** the upper delimitation surface (3) of the sealing strip (1), the lower delimitation surface (4), and portions of a side surface of the sealing strip where the protrusion (2) is arranged, are designed with a continuous direction of the surface perpendiculars of these surfaces, whereas the direction of the surface perpendicular of a side surface of the protrusion, facing away from the sealing strip (1), changes direction so that the scalar product between the surface perpendicular of this outer side surface and a vector along the longitudinal direction of the sealing strip (1) in this portion shifts sign on both sides of the recess (7) in the longitudinal direction of the sealing strip (1).

16. An assembly according to any one of claims 10 - 15,
**characterised in that** the protrusion (2) exhibits an outer side surface (12) facing away from the sealing strip (1) and an inner side surface (13) facing towards the sealing strip (1), that the inner side surface (13) is curved and exhibits a maximum radius of curvature (Rᵢ) and that the outer side surface (12) is curved and exhibits a maximum radius of curvature (R_{y}), wherein the maximum radius of curvature of the outer side surface (12) is larger that the maximum radius of curvature of the inner side surface (13).

17. An assembly according to any one of claims 10 - 16,
**characterised in that** said sealing strip (1) is designed with a sufficient number of protrusions (2) in order to enable self-supporting installation in the groove (21).

18. An assembly according to any one of claims 10 - 17,
**characterised in that** the groove (21) and the sealing strip (1) are designed in an endless way.

19. An assembly according to any one of claims 10 - 18,
**characterised in that** the sealing strip (1) and the groove (21) are designed with a longitudinal direction varying in three dimensions.

## Patentansprüche

1. Dichtungsstreifen (1),
der aus einem im Wesentlichen nicht komprimierbaren Material besteht, zum Abdichten zwischen einem ersten (20) und einem zweiten Bauteil, die miteinander verbunden wurden, wobei der Dichtungsstreifen (1) dazu ausgelegt ist, in eine Nut (21) eingefügt zu werden, die am ersten Bauteil (20) vorhanden ist, und wobei der Dichtungsstreifen (1) eine im Wesentlichen konstante Breite entlang des Hauptabschnitts seiner Länge und mindestens einen Vorsprung (2) am Dichtungsstreifen (1) zum Positionieren des Dichtungsstreifens (1) in der Längsrichtung relativ zum ersten Bauteil (20) aufweist, wobei der Dichtungsstreifen (1) an diesem Abschnitt in die Nut (21) eingeklemmt werden soll,
**dadurch gekennzeichnet, dass** der mindestens eine Vorsprung (2) eine Aussparung (7) aufweist, die zumindest teilweise durch das Einklemmen zusammengedrückt werden soll, während die Änderung der Höhe (Hₗ) des Dichtungsstreifens (1), die durch das Einklemmen verursacht wird, verringert wird.

2. Dichtungsstreifen nach Anspruch 1,
**dadurch gekennzeichnet, dass** die Aussparung (7) als Durchführung gestaltet ist.

3. Dichtungsstreifen nach Anspruch 2,
wobei der Dichtungsstreifen (1) eine untere Begrenzungsfläche (4), die an einer Bodenoberfläche, die in der Nut (21) ausgebildet ist, anliegen soll, und eine obere Begrenzungsfläche (3), die an dem zweiten Bauteil anliegen soll, aufweist,
**dadurch gekennzeichnet, dass** sich die Durchführung durch den Vorsprung (2) in einer Richtung zwischen der oberen Begrenzungsfläche (3) und der unteren Begrenzungsfläche (4) erstreckt.

4. Dichtungsstreifen nach einem der vorhergehenden Ansprüche,
wobei der Vorsprung (2) eine obere Begrenzungsfläche (3) und eine untere Begrenzungsfläche (4) aufweist,
**dadurch gekennzeichnet, dass** eine Projektion der oberen und der unteren Begrenzungsfläche (3; 4) des Vorsprungs (2) parallel zur Breite des Dichtungsstreifens zwischen der oberen und der unteren Begrenzungsfläche (3; 4) des Dichtungsstreifens (1) liegt.

5. Dichtungsstreifen nach Anspruch 4,
**dadurch gekennzeichnet, dass** der Vorsprung (2) eine Ausdehnung (Hᵤ) in der Höhenrichtung (H) aufweist, die kleiner ist als die Ausdehnung (Hₗ) des Dichtungsstreifens (1) in der Höhenrichtung (H).

6. Dichtungsstreifen nach einem der vorhergehenden Ansprüche,
**dadurch gekennzeichnet, dass** die obere Begrenzungsfläche (3) des Dichtungsstreifens (1), die untere Begrenzungsfläche (4) und Abschnitte einer Seitenfläche des Dichtungsstreifens, an der der Vorsprung (2) angeordnet ist, mit den Oberflächennormalen dieser Oberflächen in einer kontinuierlichen Richtung gestaltet sind, während die Richtung der Oberflächennormale einer äußeren Seitenfläche des Vorsprungs, die vom Dichtungsstreifen (1) abgewandt ist, die Richtung so ändert, dass das Skalarprodukt zwischen der Oberflächennormalen dieser äußeren Seitenfläche und einem Vektor entlang der Längsrichtung des Dichtungsstreifens (1) in diesem Abschnitt das Vorzeichen auf beiden Seiten der Aussparung (7) in der Längsrichtung des Dichtungsstreifens (1) wechselt.

7. Dichtungsstreifen nach einem der vorhergehenden Ansprüche,
**dadurch gekennzeichnet, dass** der Vorsprung (2) eine äußere Seitenfläche (12), die vom Dichtungsstreifen (1) abgewandt ist, und eine innere Seitenfläche (13), die dem Dichtungsstreifen (1) zugewandt ist, aufweist, dass die innere Seitenfläche (13) gekrümmt ist und einen maximalen Krümmungsradius (Rᵢ) aufweist und dass die äußere Seitenfläche gekrümmt ist und einen maximalen Krümmungsradius (R_{y}) aufweist, wobei der maximale Krümmungsradius der äußeren Seitenfläche (12) größer ist als der maximale Krümmungsradius der inneren Seitenfläche (13).

8. Dichtungsstreifen nach einem der vorhergehenden Ansprüche,
**dadurch gekennzeichnet, dass** der Dichtungsstreifen (1) als Endlosstreifen gestaltet ist.

9. Dichtungsstreifen nach einem der vorhergehenden Ansprüche,
**dadurch gekennzeichnet, dass** der Dichtungsstreifen (1) so entworfen ist, dass sich seine Längsrichtung (X) in drei Dimensionen verändert.

10. Anordnung mit einem ersten Bauteil (20), einem zweiten Bauteil und einem Dichtungsstreifen (1), der in eine Nut (21) eingefügt ist, die am ersten Bauteil (20) vorhanden ist, wobei der Dichtungsstreifen (1) eine im Wesentlichen konstante Breite entlang des Hauptabschnitts seiner Länge und mindestens einen Vorsprung (2) am Dichtungsstreifen (1) zum Positionieren des Dichtungsstreifens (1) in der Längsrichtung relativ zum ersten Bauteil (20) aufweist, wobei der Dichtungsstreifen an diesem Abschnitt in die Nut eingeklemmt ist,
**dadurch gekennzeichnet, dass** der mindestens eine Vorsprung (2) eine Aussparung (7) aufweist, die zumindest teilweise durch das Einklemmen zusammengedrückt wird, während die Änderung der Höhe (Hₗ) des Dichtungsstreifens (1), die durch das Einklemmen verursacht wird, verringert wird.

11. Anordnung nach Anspruch 10,
**dadurch gekennzeichnet, dass** die Aussparung (7) als Durchführung gestaltet ist.

12. Anordnung nach Anspruch 11,
wobei der Dichtungsstreifen (1) eine untere Begrenzungsfläche (4), die an einer Bodenoberfläche, die in der Nut (21) ausgebildet ist, anliegen soll, und eine obere Begrenzungsfläche (4), die an dem zweiten Bauteil anliegen soll, aufweist,
**dadurch gekennzeichnet, dass** sich die Durchführung zwischen der oberen Begrenzungsfläche (3) und der unteren Begrenzungsfläche (4) erstreckt.

13. Anordnung nach einem der Ansprüche 10-12,
wobei der Vorsprung (2) eine obere Begrenzungsfläche (3) und eine untere Begrenzungsfläche (4) aufweist,
**dadurch gekennzeichnet, dass** eine Projektion der oberen und der unteren Begrenzungsfläche (3; 4) des Vorsprungs (2) parallel zur Breite des Dichtungsstreifens (1) zwischen der oberen und der unteren Begrenzungsfläche (3; 4) des Vorsprungs (2) liegt.

14. Anordnung nach Anspruch 13,
**dadurch gekennzeichnet, dass** der Vorsprung (2) eine Ausdehnung (Hu) in der Höhenrichtung (H) aufweist, die kleiner ist als die Ausdehnung (HI) des Dichtungsstreifens (1) in der Höhenrichtung (H).

15. Anordnung nach einem der Ansprüche 10 - 14,
**dadurch gekennzeichnet, dass** die obere Begrenzungsfläche (3) des Dichtungsstreifens (1), die untere Begrenzungsfläche (4) und Abschnitte einer Seitenfläche des Dichtungsstreifens, an der der Vorsprung (2) angeordnet ist, mit einer kontinuierlichen Richtung der Oberflächennormalen dieser Oberflächen gestaltet sind, wohingegen die Richtung der Oberflächennormale einer Seitenfläche des Vorsprungs, die vom Dichtungsstreifen (1) abgewandt ist, die Richtung so ändert, dass das Skalaprodukt zwischen der Oberflächennormalen dieser äußeren Seitenfläche und einem Vektor entlang der Längsrichtung des Dichtungsstreifens (1) in diesem Abschnitt das Vorzeichen auf beiden Seiten der Aussparung (7) in der Längsrichtung des Dichtungsstreifens (1) wechselt.

16. Anordnung nach einem der Ansprüche 10 - 15,
**dadurch gekennzeichnet, dass** der Vorsprung (2) eine äußere Seitenfläche (12), die vom Dichtungsstreifen (1) abgewandt ist, und eine innere Seitenfläche (13), die dem Dichtungsstreifen (1) zugewandt ist, aufweist, dass die innere Seitenfläche (13) gekrümmt ist und einen maximalen Krümmungsradius (Rᵢ) aufweist und dass die äußere Seitenfläche (12) gekrümmt ist und einen maximalen Krümmungsradius (R_{y}) aufweist, wobei der maximale Krümmungsradius der äußeren Seitenfläche (12) größer ist als der maximale Krümmungsradius der inneren Seitenfläche (13).

17. Anordnung nach einem der Ansprüche 10 - 16,
**dadurch gekennzeichnet, dass** der Dichtungsstreifen (1) mit einer ausreichenden Anzahl von Vorsprüngen (2) gestaltet ist, um eine selbsttragende Installation in der Nut (21) zu ermöglichen.

18. Anordnung nach einem der Ansprüche 10 - 17,
**dadurch gekennzeichnet, dass** die Nut (21) und der Dichtungsstreifen (1) in einer Endlosweise ausgebildet sind.

19. Anordnung nach einem der Ansprüche 10 - 18,
**dadurch gekennzeichnet, dass** der Dichtungsstreifen (1) und die Nut (21) so ausgebildet sind, dass sich ihre Längsrichtung in drei Dimensionen verändert.

## Revendications

1. Bande d'étanchéité (1),
faite d'un matériau sensiblement incompressible, pour assurer l'étanchéité entre une première (20) et une deuxième parties composantes qui ont été réunies l'une à l'autre, la bande d'étanchéité (1) étant apte à être insérée dans une rainure (21) présente sur la première partie composante (20), et la bande d'étanchéité (1) présentant une largeur sensiblement constante sur la majeure portion de sa longueur et au moins une protubérance (2) sur la bande d'étanchéité (1) pour positionner la bande d'étanchéité (1) dans la direction longitudinale par rapport à ladite première partie composante (20), la bande d'étanchéité (1) étant destinée à être pincée dans ladite rainure (21) au niveau de cette portion,
***caractérisée en ce que*** ladite au moins une protubérance (2) présente un évidement (7) qui est destiné à être, au moins partiellement, comprimé par ledit pincement, tout en réduisant le changement de hauteur (H₁) de la bande d'étanchéité (1) provoqué par ledit pincement.

2. Bande d'étanchéité selon la revendication 1,
***caractérisée en ce que*** ledit évidement (7) est conçu comme une traversée.

3. Bande d'étanchéité selon la revendication 2,
dans laquelle la bande d'étanchéité (1) offre une surface de délimitation inférieure (4) destinée à s'abouter contre une surface de fond formée dans ladite rainure (21), et une surface de délimitation supérieure (3) destinée à s'abouter contre ladite deuxième partie composante,
***caractérisée en ce que*** la traversée traverse la protubérance (2) dans une direction s'étendant entre ladite surface de délimitation supérieure (3) et ladite surface de délimitation inférieure (4).

4. Bande d'étanchéité selon l'une quelconque des revendications précédentes, dans laquelle ladite protubérance (2) présente une surface de délimitation supérieure (3) et une surface de délimitation inférieure (4),
***caractérisée en ce qu*'**une saillie des surfaces de délimitation supérieure et inférieure (3 ; 4) de la protubérance (2) en parallèle avec la largeur de la bande d'étanchéité est située entre les surfaces de délimitation supérieure et inférieure (3 ; 4) de la bande d'étanchéité (1).

5. Bande d'étanchéité selon la revendication 4,
***caractérisée en ce que*** la protubérance (2) présente une extension (Hᵤ) dans le sens de la hauteur (H) qui est inférieure à l'extension (H_{I}) de la bande d'étanchéité (1) dans le sens de la hauteur (H).

6. Bande d'étanchéité selon l'une quelconque des revendications précédentes,
***caractérisée en ce que*** la surface de délimitation supérieure (3) de la bande d'étanchéité (1), la surface de délimitation inférieure (4), et des portions d'une surface latérale de la bande d'étanchéité où se trouve la protubérance (2), sont conçues avec les perpendiculaires à la surface de ces surfaces dans une direction continue, alors que la direction de la perpendiculaire à la surface d'une surface latérale extérieure de la saillie tournée vers l'extérieur de la bande d'étanchéité (1) change de direction de telle sorte que le produit scalaire entre la perpendiculaire à la surface de cette surface latérale extérieure et un vecteur dans la direction longitudinale de la bande d'étanchéité (1) dans cette portion change de signe sur les deux côtés de l'évidement (7) dans la direction longitudinale de la bande d'étanchéité (1).

7. Bande d'étanchéité selon l'une quelconque des revendications précédentes,
***caractérisée en ce que*** la protubérance (2) présente une surface latérale extérieure (12) tournée vers l'extérieur de la bande d'étanchéité (1), et une surface latérale intérieure (13) tournée vers la bande d'étanchéité (1), ***en ce que** la* surface latérale intérieure (13) est courbe et présente un rayon maximal de courbure (Rᵢ), et ***en ce que*** la surface latérale extérieure est courbe et présente un rayon maximal de courbure (R_{y}), le rayon maximal de courbure de la surface latérale extérieure (12) étant supérieur au rayon maximal de courbure de la surface latérale intérieure (13).

8. Bande d'étanchéité selon l'une quelconque des revendications précédentes,
***caractérisée en ce que*** la bande d'étanchéité (1) est conçue sous la forme d'une bande sans fin.

9. Bande d'étanchéité selon l'une quelconque des revendications précédentes,
***caractérisée en ce que*** la bande d'étanchéité (1) est conçue avec une direction longitudinale (X) qui varie en trois dimensions.

10. Ensemble comprenant une première partie composante (20) et une deuxième partie composante, et une bande d'étanchéité (1) qui est insérée dans une rainure (21) présente sur la première partie composante (20), la bande d'étanchéité (1) présentant une largeur sensiblement constante sur la majeure portion de sa longueur et au moins une protubérance (2) sur la bande d'étanchéité (1) pour positionner la bande d'étanchéité (1) dans la direction longitudinale par rapport à ladite première partie composante (20), la bande d'étanchéité (1) étant pincée dans ladite rainure (21) au niveau de cette portion,
***caractérisé en ce que*** ladite au moins une protubérance (2) présente un évidement (7) qui est destiné à être, au moins partiellement, comprimé par ledit pincement, tout en réduisant le changement de hauteur (H₁) de la bande d'étanchéité (1) provoqué par ledit pincement.

11. Ensemble selon la revendication 10,
***caractérisé en ce que*** ledit évidement (7) est conçu comme une traversée.

12. Ensemble selon la revendication 11,
dans lequel la bande d'étanchéité (1) présente une surface de délimitation inférieure (4) destinée à s'abouter contre une surface de fond formée dans la rainure (21), et une surface de délimitation supérieure (3) destinée à s'abouter contre ladite deuxième partie composante,
***caractérisé en ce que*** la traversée s'étend entre ladite surface de délimitation supérieure (3) et la surface de délimitation inférieure (4).

13. Ensemble selon l'une quelconque des revendications 10 à 12,
dans lequel ladite protubérance (2) présente une surface de délimitation supérieure (3) et une surface de délimitation inférieure (4),
***caractérisé en ce qu*'**une saillie des surfaces de délimitation supérieure et inférieure (3 ; 4) de la protubérance (2) en parallèle avec la largeur de la bande d'étanchéité (1) est située entre les surfaces de délimitation supérieure et inférieure (3 ; 4) de la protubérance (2).

14. Ensemble selon la revendication 13,
***caractérisé en ce que*** la protubérance (2) présente une extension (Hᵤ) dans le sens de la hauteur (H) qui est inférieure à l'extension (H_{I}) de la bande d'étanchéité (1) dans le sens de la hauteur (H).

15. Ensemble selon l'une quelconque des revendications 10 à 14,
***caractérisé en ce que*** la surface de délimitation supérieure (3) de la bande d'étanchéité (1), la surface de délimitation inférieure (4), et des portions d'une surface latérale de la bande d'étanchéité où se trouve la protubérance (2), sont conçues avec une direction continue des perpendiculaires à la surface de ces surfaces, alors que la direction de la perpendiculaire à la surface d'une surface latérale de la saillie, tournée vers l'extérieur de la bande d'étanchéité (1), change de direction de telle sorte que le produit scalaire entre la perpendiculaire à la surface de cette surface latérale extérieure et un vecteur dans la direction longitudinale de la bande d'étanchéité (1) dans cette portion change de signe sur les deux côtés de l'évidement (7) dans la direction longitudinale de la bande d'étanchéité (1).

16. Ensemble selon l'une quelconque des revendications 10 à 15,
***caractérisé en ce que*** la protubérance (2) présente une surface latérale extérieure (12) tournée vers l'extérieur de la bande d'étanchéité (1), et une surface latérale intérieure (13) tournée vers la bande d'étanchéité (1), ***en ce que** la* surface latérale intérieure (13) est courbe et présente un rayon maximal de courbure (Rᵢ), et ***en ce que*** la surface latérale extérieure est courbe et présente un rayon maximal de courbure (R_{y}), le rayon maximal de courbure de la surface latérale extérieure (12) étant supérieur au rayon maximal de courbure de la surface latérale intérieure (13).

17. Ensemble selon l'une quelconque des revendications 10 à 16,
***caractérisé en ce que*** la bande d'étanchéité (1) est conçue avec un nombre suffisant de protubérances (2) pour permettre une installation autoportante dans la rainure (21).

18. Ensemble selon l'une quelconque des revendications 10 à 17,
***caractérisé en ce que*** la rainure (21) et la bande d'étanchéité (1) sont conçues sans fin.

19. Ensemble selon l'une quelconque des revendications 10 à 18,
***caractérisé en ce que*** la bande d'étanchéité (1) et la rainure (21) sont conçues avec une direction longitudinale variant en trois dimensions.
